# EUROPEAN PATENT APPLICATION

(11) **EP 4 574 562 A1**
(43) Date of publication of application: **25.06.2025**
(21) Application number: 24863842.1
(22) Date of filing: 21.06.2024
(51) Int. Cl.: B60N 2/28

(54) **SEAT BODY ANGLE ADJUSTMENT STRUCTURE AND CHILD SAFETY SEAT**

(30) Priority: 27.09.2023 CN 202311262027
(71) Applicant: Max-Inf (Ningbo) Baby Product Co., Ltd, Ningbo, Zhejiang 315105 (CN)
(72) Inventor: ZHOU, Xiaolin, Ningbo, Zhejiang 315000 (CN)
(74) Representative: Ipside
(86) International application number: PCT/CN2024/100627
(87) International publication number: WO 2025/066319

(57) **Abstract**

This invention provides a seat body angle adjustment structure and child safety seat, including a base, an electric adjustment assembly, a manual adjustment assembly, and an angle adjustment assembly. Both the electric adjustment assembly and the manual adjustment assembly are connected to the angle adjustment assembly. The connection state between the electric adjustment assembly and the angle adjustment assembly has a transmission connection state and a sliding connection state. The movement of the angle adjustment assembly can drive the inclination angle adjustment of the seat body. In the transmission connection state, the electric adjustment assembly works to drive the angle adjustment assembly to move, achieving the inclination angle adjustment of the seat body. In the sliding connection state, the manual adjustment assembly moves to drive the angle adjustment assembly to move, achieving the inclination angle adjustment of the seat body. This invention enables parents or users to choose the appropriate inclination angle adjustment method according to actual needs. The electric adjustment method is suitable for daily use, while the manual adjustment method is not limited by power supply, improving convenience, safety, and flexibility of use.

## Description

### Technical Field

The present invention relates to the technical field of automotive safety products, specifically to a seat body angle adjustment structure and child safety seat.

### Background Art

With the continuous upgrade of consumption and industry technology, more and more parents are beginning to pay attention to the safety of child seats, while also focusing more on the convenience of operation and multi-functionality of the seats. They hope that the seats can be suitable for various usage scenarios. Specifically, some parents hope that the seat can freely adjust the inclination angle to meet the different needs of children, but the child safety seats currently available on the market either use electric adjustment to achieve the adjustment of the seat body angle, or require manual operation to achieve the adjustment of the seat body angle, lacking convenience.

### Summary of the Invention

To solve at least one aspect of the above problems, the present invention first provides a seat body angle adjustment structure, including a base, an electric adjustment assembly, a manual adjustment assembly, and an angle adjustment assembly suitable for connecting to the seat body. The electric adjustment assembly and the manual adjustment assembly are both connected to the angle adjustment assembly. The connection state between the electric adjustment assembly and the angle adjustment assembly has a transmission connection state and a sliding connection state. The movement of the angle adjustment assembly can drive the inclination angle adjustment of the seat body. In the transmission connection state, the electric adjustment assembly works to drive the angle adjustment assembly to move, achieving the inclination angle adjustment of the seat body. In the sliding connection state, the manual adjustment assembly moves to drive the angle adjustment assembly to move, achieving the inclination angle adjustment of the seat body.

Optionally, the base is connected to a fixing plate, and the seat body is connected to a first seat body fixing rod and a second seat body fixing rod. The fixing plate is provided with a first slide rail that slidably connects to the first seat body fixing rod and a second slide rail that slidably connects to the second seat body fixing rod. The angle adjustment assembly is connected to the first seat body fixing rod.

Optionally, the angle adjustment assembly includes a gear box and a seat body connecting bracket. The two ends of the seat body connecting bracket are pivotally connected to the gear box and the first seat body fixing rod respectively. Both the electric adjustment assembly and the manual adjustment assembly are connected to the gear box.

Optionally, the electric adjustment assembly includes a drive motor, a lead screw, and a gear plate. The drive motor is connected to the lead screw and can drive the lead screw to rotate synchronously. The gear plate is installed inside the gear box, and the lead screw passes through the gear box. The gear box can move back and forth along the lead screw. When in the transmission connection state, the gear plate is in threaded transmission connection with the lead screw. The drive motor works to drive the lead screw to rotate, the lead screw drives the gear plate to move, thus driving the gear box to move. The gear box drives the seat body connecting bracket to move, thereby driving the seat body to move, achieving the inclination angle adjustment of the seat body relative to the base. When in the sliding connection state, the gear plate is separated from the lead screw, the manual adjustment assembly moves to drive the gear plate to move, the gear box drives the seat body connecting bracket to move, thereby driving the seat body to move, achieving the inclination angle adjustment of the seat body relative to the base.

Optionally, the electric adjustment assembly also includes interconnected bearings and bearing seats. The bearing seat is connected to the base, and the end of the lead screw away from the drive motor is connected to the bearing.

Optionally, the manual adjustment assembly includes a pull cable and a gear plate unlocking piece. The gear plate unlocking piece is installed inside the gear box, and the pull cable passes through the gear box and connects to the gear plate unlocking piece. The pull cable pulls the gear plate unlocking piece to move, driving the gear plate to move, thereby separating the gear plate from the lead screw.

Optionally, the gear plate includes a first gear plate and a second gear plate, both of which are slidably connected left and right to the gear box. The gear plate unlocking piece has a first guide slot and a second guide slot. The first gear plate has a first protruding post that slidably connects to the first guide slot, and the second gear plate has a second protruding post that slidably connects to the second guide slot. When in the transmission connection state, the first protruding post and the second protruding post are close to each other. When in the sliding connection state, the first protruding post and the second protruding post are away from each other.

Optionally, the manual adjustment assembly also includes a reset piece. The front and rear ends of the reset piece are connected to the gear box and the gear plate unlocking piece respectively.

Optionally, the manual adjustment assembly also includes an unlock handle movably connected to the base. The front and rear ends of the pull cable are connected to the unlock handle and the gear plate unlocking piece respectively.

Compared to the prior art, the seat body angle adjustment structure of this invention uses either the electric adjustment assembly or the manual adjustment assembly to drive the angle adjustment assembly, allowing the adjustment of the seat body inclination angle through either electric or manual adjustment. This enables parents or users to choose the appropriate inclination angle adjustment method according to actual needs. The electric adjustment method is suitable for daily use, allowing adjustment of the seat body inclination angle through the electric adjustment assembly. The manual adjustment method provides a backup adjustment option when the electric adjustment assembly stops working, not limited by power supply, thus improving the convenience, safety, and flexibility of the child safety seat.

Additionally, this invention provides a child safety seat that includes the aforementioned seat body angle adjustment structure.

Compared to the prior art, the child safety seat of this invention has the same advantages as the aforementioned seat body angle adjustment structure relative to the prior art, which will not be repeated here.

### Brief Description of the Drawings

Figure 1 is a structural diagram of the seat body angle adjustment structure in the embodiment of this invention;
Figure 2 is a partial exploded view of the seat body angle adjustment structure in the embodiment of this invention;
Figure 3 is a sectional view of the seat body angle adjustment structure in the initial position in the embodiment of this invention;
Figure 4 is a partial structural diagram one of the seat body angle adjustment structure in the initial position in the embodiment of this invention;
Figure 5 is a partial structural diagram two of the seat body angle adjustment structure in the initial position in the embodiment of this invention;
Figure 6 is a partial structural diagram one of the seat body angle adjustment structure during manual adjustment in the embodiment of this invention;
Figure 7 is a partial structural diagram two of the seat body angle adjustment structure during manual adjustment in the embodiment of this invention;
Figure 8 is a structural diagram of the seat body angle adjustment structure adjusted to the large recline angle position in the embodiment of this invention.

### List of reference numerals:

1, base; 2, electric adjustment assembly; 21, drive motor; 22, lead screw; 23, bearing; 25, first gear plate; 251, first protruding post; 26, second gear plate; 261, second protruding post; 3, manual adjustment assembly; 31, pull cable; 32, gear plate unlocking piece; 321, first guide slot; 322, second guide slot; 33, reset piece; 34, unlock handle; 4, angle adjustment assembly; 41, gear box; 42, seat body connecting bracket; 5, fixing plate; 51, first slide rail; 52, second slide rail; 6, first seat body fixing rod; 7, second seat body fixing rod.

### Detailed Description of Embodiments

To make the above-mentioned objectives, features, and advantages of this invention more apparent and easier to understand, the specific embodiments of this invention will be described in detail with reference to the accompanying drawings.

In the description of this invention, it should be understood that terms such as "up" and "down" indicate directional or positional relationships based on the normal use position of the product.

The terms "first" and "second" are used only for descriptive purposes and should not be understood as indicating or implying relative importance or implicitly indicating the number of technical features referred to. Thus, features defined as "first" and "second" may explicitly or implicitly include at least one such feature. In the drawings of the embodiments of this invention, a coordinate system XY is set up, where the positive direction of the X-axis represents the left direction, the negative direction of the X-axis represents the right direction, the positive direction of the Y-axis represents the forward direction, and the negative direction of the Y-axis represents the backward direction.

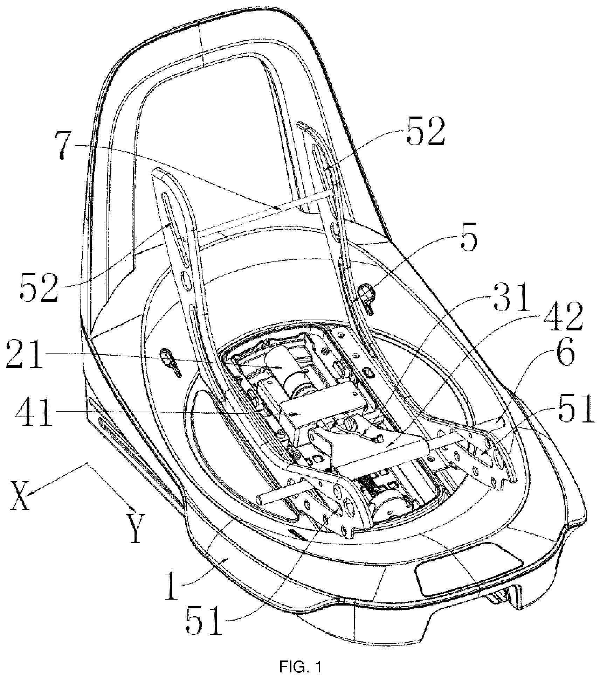

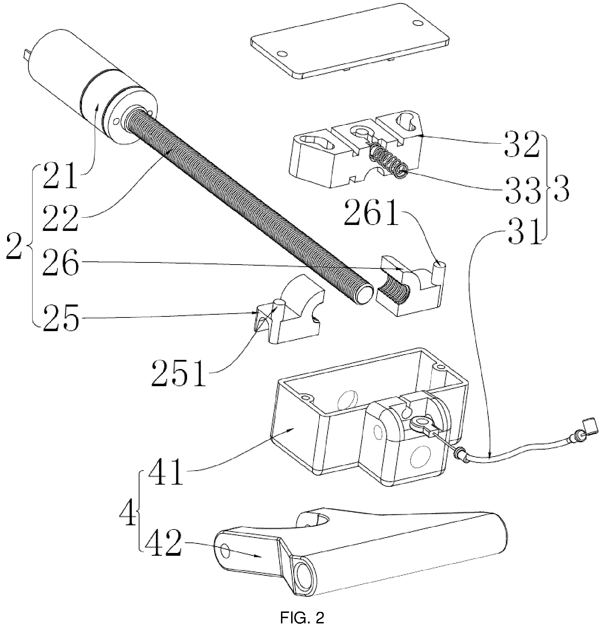

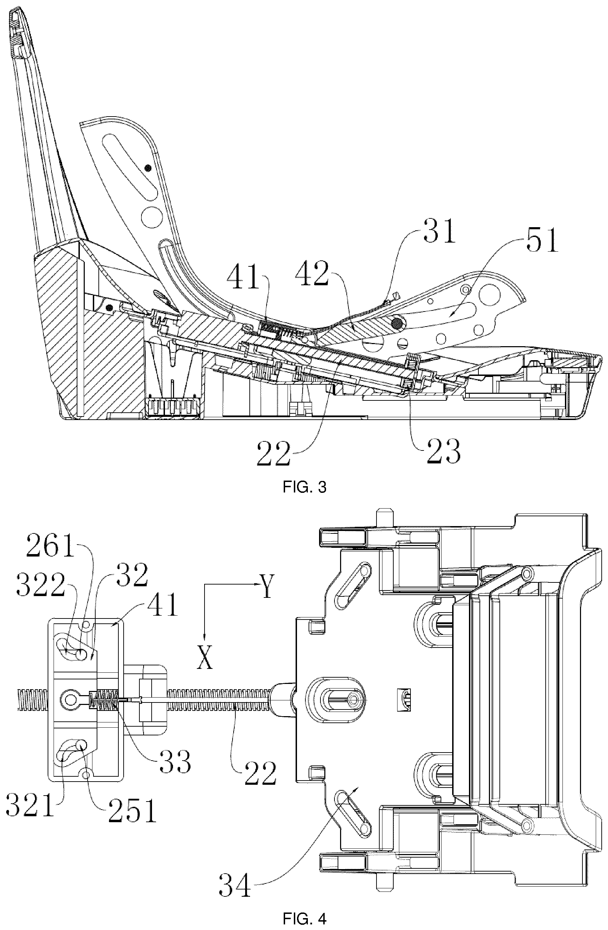

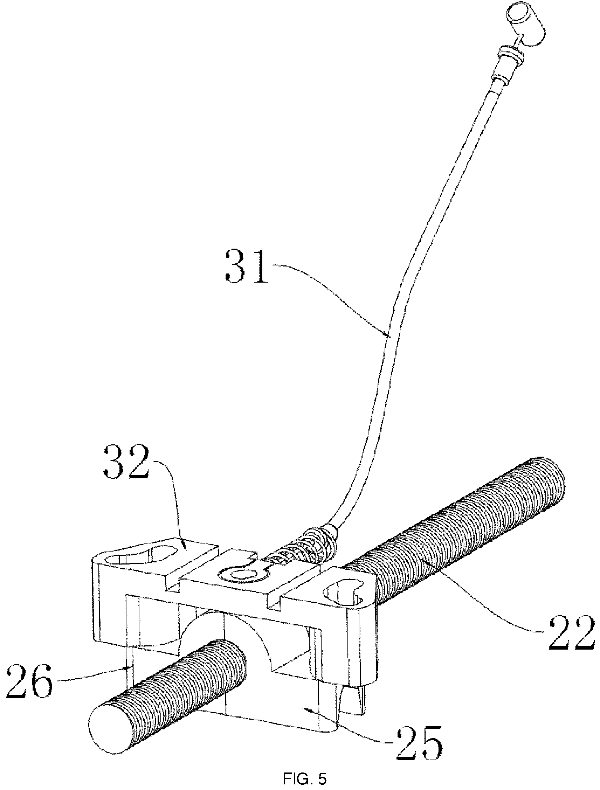

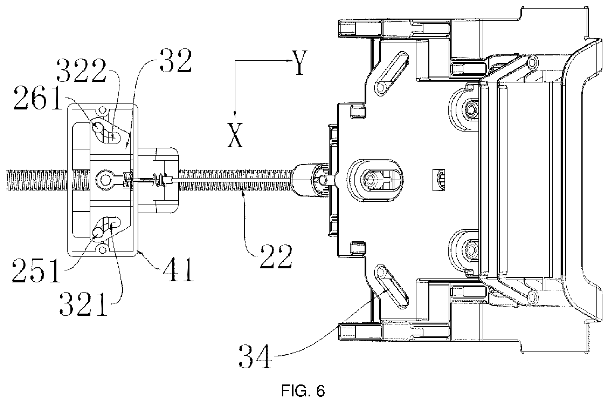

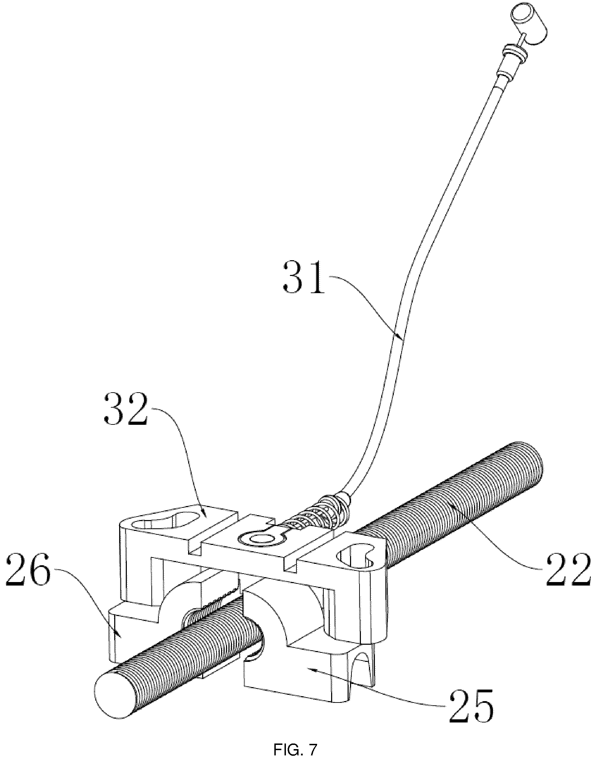

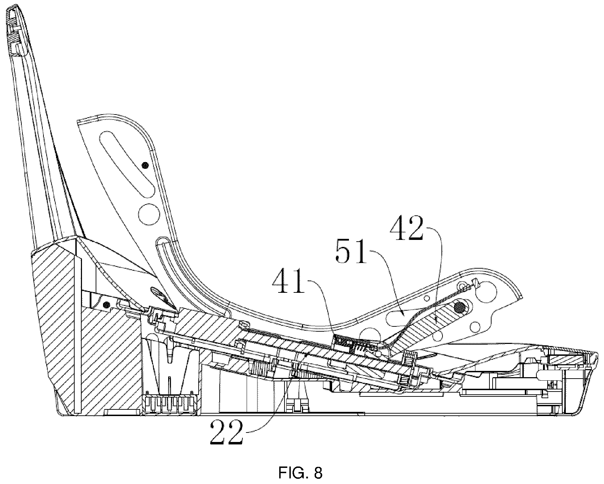

The embodiment of this invention provides a seat body angle adjustment structure, as shown in Figures 1 to 8, including a base 1, an electric adjustment assembly 2, a manual adjustment assembly 3, and an angle adjustment assembly 4 suitable for connecting to the seat body. The electric adjustment assembly 2 and the manual adjustment assembly 3 are both connected to the angle adjustment assembly 4. The connection state between the electric adjustment assembly 2 and the angle adjustment assembly 4 has a transmission connection state and a sliding connection state. The movement of the angle adjustment assembly 4 can drive the inclination angle adjustment of the seat body. In the transmission connection state, the electric adjustment assembly 2 works to drive the angle adjustment assembly 4 to move, achieving the inclination angle adjustment of the seat body. In the sliding connection state, the manual adjustment assembly 3 moves to drive the angle adjustment assembly 4 to move, achieving the inclination angle adjustment of the seat body.

The seat body is movably installed on the base 1, and the seat body can be adjusted in inclination angle relative to the base 1 to meet different needs of children. The electric adjustment assembly 2 is electrically connected to a circuit board, and the working state of the electric adjustment assembly 2 can be controlled through operation keys set on the seat or through Bluetooth connection to the car's system and mobile phone APP. This way, when one parent is driving alone with a child, they can adjust the seat body inclination angle at any time according to the child's seating needs. The seat can also be designed with a zero-gravity large recline angle state. Through connection with the car's monitoring device or built-in monitoring device, the child's state can be monitored. When the child falls asleep, it controls the movement of the electric adjustment assembly 2, automatically adjusting the seat to the zero-gravity large recline angle state. In addition, the operation of the electric adjustment assembly 2 can also be controlled through one-button operation or voice control.

The manual adjustment assembly 3 and the electric adjustment assembly 2 alternately drive the angle adjustment assembly 4 to move. That is, when the electric adjustment assembly 2 and the angle adjustment assembly 4 are in a transmission connection state, the manual adjustment assembly 3 will not drive the angle adjustment assembly 4 to move. At this time, when the electric adjustment assembly 2 is powered on, it can drive the angle adjustment assembly 4 to move. When the electric adjustment assembly 2 and the angle adjustment assembly 4 are in a sliding connection state, the electric adjustment assembly 2 will not drive the angle adjustment assembly 4 to move. At this time, the manual adjustment assembly 3, driven by human force, can drive the angle adjustment assembly 4 to move.

The seat body angle adjustment structure in this embodiment uses either the electric adjustment assembly 2 or the manual adjustment assembly 3 to drive the angle adjustment assembly 4, allowing adjustment of the seat body inclination angle through either electric or manual adjustment. This enables parents or users to choose the appropriate inclination angle adjustment method according to actual needs. The electric adjustment method is suitable for daily use, allowing adjustment of the seat body inclination angle through the electric adjustment assembly 2. The manual adjustment method provides a backup adjustment option when the electric adjustment assembly 2 stops working, not limited by power supply, thus improving the convenience, safety, and flexibility of the child safety seat.

Optionally, as shown in Figures 1, 3, and 8, the base 1 is connected to a fixing plate 5, the seat body is connected to a first seat body fixing rod 6 and a second seat body fixing rod 7, the fixing plate 5 is provided with a first slide rail 51 that slidably connects to the first seat body fixing rod 6 and a second slide rail 52 that slidably connects to the second seat body fixing rod 7, and the angle adjustment assembly 4 is connected to the first seat body fixing rod 6. The seat body is slidably connected to the fixing plate 5 through the first seat body fixing rod 6 and the second seat body fixing rod 7, achieving a sliding connection between the seat body and the base 1. The first seat body fixing rod 6 and the second seat body fixing rod 7 are arranged in parallel front and back. When the angle adjustment assembly 4 drives the first seat body fixing rod 6 to move within the first slide rail 51, the second seat body fixing rod 7 also moves synchronously within the second slide rail 52, thus driving the inclination angle change of the seat body, with a stable and reliable structure.

Optionally, as shown in Figures 1, 2, 3, and 8, the angle adjustment assembly 4 includes a gear box 41 and a seat body connecting bracket 42. The two ends of the seat body connecting bracket 42 are pivotally connected to the gear box 41 and the first seat body fixing rod 6 respectively. Both the electric adjustment assembly 2 and the manual adjustment assembly 3 are connected to the gear box 41. Both the electric adjustment assembly 2 and the manual adjustment assembly 3 can independently drive the gear box 41 to move, the gear box 41 drives the seat body connecting bracket 42 to move, and the seat body connecting bracket 42 drives the seat body to achieve inclination angle change. In this embodiment, a pivotally connected seat body connecting bracket 42 is set between the gear box 41 and the seat body, which not only reduces the force requirement for the electric adjustment assembly 2 or manual adjustment assembly 3, saving effort and allowing flexible adjustment, but also prevents jamming, improving the user experience.

Optionally, as shown in Figures 1 to 8, the electric adjustment assembly 2 includes a drive motor 21, a lead screw 22, and a gear plate. The drive motor 21 is connected to the lead screw 22 and can drive the lead screw 22 to rotate synchronously. The gear plate is installed inside the gear box 41, and the lead screw 22 passes through the gear box 41. The gear box 41 can move back and forth along the lead screw 22. When in the transmission connection state, the gear plate is in threaded transmission connection with the lead screw 22. The drive motor 21 works to drive the lead screw 22 to rotate, the lead screw 22 drives the gear plate to move, thus driving the gear box 41 to move. The gear box 41 drives the seat body connecting bracket 42 to move, thereby driving the seat body to move, achieving the inclination angle adjustment of the seat body relative to the base 1. When in the sliding connection state, the gear plate is separated from the lead screw 22, the manual adjustment assembly 3 moves to drive the gear plate to move, the gear box 41 drives the seat body connecting bracket 42 to move, thereby driving the seat body to move, achieving the inclination angle adjustment of the seat body relative to the base 1.

The lead screw 22 has external threads, and the gear plate has internal threads suitable for mating with these external threads. The lead screw 22 and the gear plate achieve transmission connection through threaded connection. The drive motor 21 is fixedly connected to the base 1 through a motor fixing seat, making the connection more secure. The drive motor 21 housing is powered by a battery pack, or can be powered through an external power supply via a plug-in port. The drive motor 21 is electrically connected to a circuit board, and the working state of the drive motor 21 can be controlled through operation keys set on the seat or through Bluetooth connection to the car's system and mobile phone APP. This way, when one parent is driving alone with a child, they can adjust the seat body inclination angle at any time according to the child's seating needs. When the child falls asleep, it controls the movement of the drive motor 21, automatically adjusting the seat to the zero-gravity large recline angle state. When in the sliding connection state, the gear box 41 can move freely relative to the lead screw 22.

Optionally, as shown in Figures 1 to 8, the electric adjustment assembly 2 also includes interconnected bearings 23 and bearing seats. The bearing seat is connected to the base 1, and the end of the lead screw 22 away from the drive motor 21 is connected to the bearing 23. The bearing 23 is fixed to the base 1 through the bearing seat, using the bearing 23 to connect with the lead screw 22, to ensure the stability and reliability of the lead screw 22's operation, thereby ensuring that the inclination angle adjustment of the seat body can be carried out smoothly.

Optionally, as shown in Figures 1 to 8, the manual adjustment assembly 3 includes a pull cable 31 and a gear plate unlocking piece 32. The gear plate unlocking piece 32 is installed inside the gear box 41, and the pull cable 31 passes through the gear box 41 and connects to the gear plate unlocking piece 32. The pull cable 31 pulls the gear plate unlocking piece 32 to move, driving the gear plate to move, thereby separating the gear plate from the lead screw 22.

The pull cable 31 is a thin, long rope that passes through the gear box 41 and connects to the gear plate unlocking piece 32. Users can manually adjust the seat body inclination angle by operating the pull cable 31. When manual adjustment of the seat body inclination angle is needed, the user pulls the pull cable 31, which moves the gear plate unlocking piece 32. The gear plate unlocking piece 32 then moves the gear plate, separating it from the lead screw 22. In other words, in manual adjustment mode, the gear plate is not connected to the electric adjustment assembly 2, allowing for easy switching to manual adjustment of the seat body inclination angle, providing more flexibility and convenience.

Optionally, as shown in Figures 1 to 8, the gear plate includes a first gear plate 25 and a second gear plate 26, both of which are slidably connected left and right to the gear box 41. The gear plate unlocking piece 32 has a first guide slot 321 and a second guide slot 322. The first gear plate 25 has a first protruding post 251 that slidably connects to the first guide slot 321, and the second gear plate 26 has a second protruding post 261 that slidably connects to the second guide slot 322. When in the transmission connection state, the first protruding post 251 and the second protruding post 261 are close to each other. When in the sliding connection state, the first protruding post 251 and the second protruding post 261 are away from each other. The manual adjustment assembly 3 also includes a reset piece 33. The front and rear ends of the reset piece 33 are connected to the gear box 41 and the gear plate unlocking piece 32 respectively. The manual adjustment assembly 3 also includes an unlock handle 34 movably connected to the base 1. The front and rear ends of the pull cable 31 are connected to the unlock handle 34 and the gear plate unlocking piece 32 respectively. The unlock handle 34 is exposed and relatively large in size to make it convenient for users to pull the pull cable 31 through the unlock handle 34.

Among them, the first gear plate 25 and the second gear plate 26 can move relative to each other in the left-right direction. The guide slots are oblique or arc-shaped slots, with their front ends close to each other and rear ends away from each other. When using the electric adjustment method to adjust the seat body inclination angle, it is in the transmission connection state, with the first protruding post 251 located at the front end of the first guide slot 321 and the second protruding post 261 located at the front end of the second guide slot 322. When using the manual adjustment method to adjust the seat body inclination angle, it is in the sliding connection state, with the first protruding post 251 located at the rear end of the first guide slot 321 and the second protruding post 261 located at the rear end of the second guide slot 322. The reset piece 33 is preferably a compression spring, which can push the gear plate unlocking piece 32 to automatically reset when the pull cable 31 is released.

In this embodiment, the setting of the first gear plate 25 and the second gear plate 26 that can move relative to each other allows for easy switching between electric and manual adjustment of the seat body inclination angle, with a simple and reliable structure. Specifically, when the seat is powered on and the seat body recline angle needs to be adjusted, the drive motor 21 starts to drive the lead screw 22 to rotate. The internal threads of the first gear plate 25 and the second gear plate 26 in the gear box 41 engage with the external threads of the lead screw 22. The first gear plate 25 and the second gear plate 26 in the gear box 41 do not separate from the lead screw 22 due to the spring force of the reset piece 33. The rotation of the lead screw 22 drives the first gear plate 25 and the second gear plate 26 to move back and forth, thus driving the gear box 41 to move back and forth. The seat body connecting bracket 42, driven by the translational motion of the gear box 41, adjusts the inclination angle of the seat body through its pivotal connection. When the desired angle is reached, the drive motor 21 is controlled to stop working, thus locking the inclination angle of the seat body. When the seat is powered off and the recline angle needs to be adjusted, the unlock handle 34 is pulled, which pulls the pull cable 31. The other end of the pull cable 31 is fixedly connected to the gear plate unlocking piece 32. When the unlock handle 34 pulls the pull cable 31, the gear plate unlocking piece 32 moves forward and compresses the reset piece 33 between it and the gear box 41. As the gear plate unlocking piece 32 moves forward, it simultaneously moves the first gear plate 25 and the second gear plate 26 to the left and right respectively through the first guide slot 321 and the second guide slot 322 set on both sides. The internal threads of the first gear plate 25 and the second gear plate 26 separate from the external threads of the lead screw 22. At this point, the user can push the seat body to adjust the inclination angle. When the desired angle is reached, the unlock handle 34 is released, and the first gear plate 25 and the second gear plate 26 move closer to each other under the spring force of the reset piece 33 until their internal threads engage with the external threads of the lead screw 22, completing the locking of the inclination angle. Both the electric adjustment method and the manual adjustment method described above are stepless adjustments, meaning the seat body inclination angle can be stopped at any position within the travel range, providing a good user experience.

Another embodiment of this invention provides a child safety seat that includes the aforementioned seat body angle adjustment structure.

The child safety seat in this embodiment uses either the electric adjustment assembly 2 or the manual adjustment assembly 3 to drive the angle adjustment assembly 4, allowing adjustment of the seat body inclination angle through either electric or manual adjustment. This enables parents or users to choose the appropriate inclination angle adjustment method according to actual needs. The electric adjustment method is suitable for daily use, allowing adjustment of the seat body inclination angle through the electric adjustment assembly 2. The manual adjustment method provides a backup adjustment option when the electric adjustment assembly 2 stops working, not limited by power supply, thus improving the convenience, safety, and flexibility of the child safety seat.

Although the present disclosure has been described as above, the scope of protection of this disclosure is not limited to this. Those skilled in the art can make various changes and modifications without departing from the spirit and scope of this disclosure, and these changes and modifications will all fall within the scope of protection of this invention.

## Claims

1. A seat body angle adjustment structure, **characterized in that** it includes a base (1), an electric adjustment assembly (2), a manual adjustment assembly (3), and an angle adjustment assembly (4) suitable for connecting to the seat body; the electric adjustment assembly (2) and the manual adjustment assembly (3) are both connected to the angle adjustment assembly (4); the connection state between the electric adjustment assembly (2) and the angle adjustment assembly (4) has a transmission connection state and a sliding connection state; the movement of the angle adjustment assembly (4) can drive the inclination angle adjustment of the seat body; in the transmission connection state, the electric adjustment assembly (2) works to drive the angle adjustment assembly (4) to move, achieving the inclination angle adjustment of the seat body; in the sliding connection state, the manual adjustment assembly (3) moves to drive the angle adjustment assembly (4) to move, achieving the inclination angle adjustment of the seat body.

2. **The** seat body angle adjustment structure according to claim 1, **characterized in that** the base (1) is connected to a fixing plate (5), the seat body is connected to a first seat body fixing rod (6) and a second seat body fixing rod (7), the fixing plate (5) is provided with a first slide rail (51) that slidably connects to the first seat body fixing rod (6) and a second slide rail (52) that slidably connects to the second seat body fixing rod (7), and the angle adjustment assembly (4) is connected to the first seat body fixing rod (6).

3. **The** seat body angle adjustment structure according to claim 2, **characterized in that** the angle adjustment assembly (4) includes a gear box (41) and a seat body connecting bracket (42), the two ends of the seat body connecting bracket (42) are pivotally connected to the gear box (41) and the first seat body fixing rod (6) respectively, and both the electric adjustment assembly (2) and the manual adjustment assembly (3) are connected to the gear box (41).

4. The seat body angle adjustment structure according to claim 3, **characterized in that** the electric adjustment assembly (2) includes a drive motor (21), a lead screw (22), and a gear plate; the drive motor (21) is connected to the lead screw (22) and can drive the lead screw (22) to rotate synchronously; the gear plate is installed inside the gear box (41), and the lead screw (22) passes through the gear box (41); the gear box (41) can move back and forth along the lead screw (22); when in the transmission connection state, the gear plate is in threaded transmission connection with the lead screw (22); the drive motor (21) works to drive the lead screw (22) to rotate, the lead screw (22) drives the gear plate to move, thus driving the gear box (41) to move; the gear box (41) drives the seat body connecting bracket (42) to move, thereby driving the seat body to move, achieving the inclination angle adjustment of the seat body relative to the base (1); when in the sliding connection state, the gear plate is separated from the lead screw (22), the manual adjustment assembly (3) moves to drive the gear plate to move, the gear box (41) drives the seat body connecting bracket (42) to move, thereby driving the seat body to move, achieving the inclination angle adjustment of the seat body relative to the base (1).

5. The seat body angle adjustment structure according to claim 4, **characterized in that** the electric adjustment assembly (2) also includes interconnected bearings (23) and bearing seats; the bearing seat is connected to the base (1), and the end of the lead screw (22) away from the drive motor (21) is connected to the bearing (23).

6. The seat body angle adjustment structure according to claim 4 or 5, **characterized in that** the manual adjustment assembly (3) includes a pull cable (31) and a gear plate unlocking piece (32); the gear plate unlocking piece (32) is installed inside the gear box (41), and the pull cable (31) passes through the gear box (41) and connects to the gear plate unlocking piece (32); the pull cable (31) pulls the gear plate unlocking piece (32) to move, driving the gear plate to move, thereby separating the gear plate from the lead screw (22).

7. The seat body angle adjustment structure according to claim 6, **characterized in that** the gear plate includes a first gear plate (25) and a second gear plate (26), the first gear plate (25) and the second gear plate (26) are both slidably connected left and right to the gear box (41); the gear plate unlocking piece (32) has a first guide slot (321) and a second guide slot (322), the first gear plate (25) has a first protruding post (251) that slidably connects to the first guide slot (321), and the second gear plate (26) has a second protruding post (261) that slidably connects to the second guide slot (322); when in the transmission connection state, the first protruding post (251) and the second protruding post (261) are close to each other, when in the sliding connection state, the first protruding post (251) and the second protruding post (261) are away from each other.

8. The seat body angle adjustment structure according to claim 6, **characterized in that** the manual adjustment assembly (3) also includes a reset piece (33), the front and rear ends of the reset piece (33) are connected to the gear box (41) and the gear plate unlocking piece (32) respectively.

9. The seat body angle adjustment structure according to claim 6, **characterized in that** the manual adjustment assembly (3) also includes an unlock handle (34) movably connected to the base (1), the front and rear ends of the pull cable (31) are connected to the unlock handle (34) and the gear plate unlocking piece (32) respectively.

10. A child safety seat, **characterized in that** it includes the seat body angle adjustment structure according to any one of claims 1-9.
